Europäisches Patentamt

(19) European Patent Office

Office européen des brevets

(11) Numéro de publication : **0 289 388 B1**

(12) **FASCICULE DE BREVET EUROPEEN**

(45) Date de publication du fascicule du brevet :
14.08.91 Bulletin 91/33

(51) Int. Cl.⁵ : **G21D 1/00, F22B 1/02**

(21) Numéro de dépôt : **88400925.9**

(22) Date de dépôt : **15.04.88**

(54) **Procédé de remplacement intégral d'un générateur de vapeur d'un réacteur nucléaire à eau sous pression.**

(30) Priorité : **27.04.87 FR 8705936**

(43) Date de publication de la demande :
**02.11.88 Bulletin 88/44**

(45) Mention de la délivrance du brevet :
**14.08.91 Bulletin 91/33**

(84) Etats contractants désignés :
**BE CH DE ES LI SE**

(56) Documents cités :
**NUCLEAR ENGINEERING INTERNATIONAL,
vol. 30, no. 376, novembre 1985, pages 44-45;
"Why the steam generators are being replaced at Ringhals 2"**

(56) Documents cités :
**NUCLEAR ENGINEERING INTERNATIONAL,
vol. 30, no. 364, janvier 1985, pages 38-42; H.
MOERS et al.: "Point beach 1 steam generators replaced well ahead of schedule"
MICROTECNIC, no. 3, 1984, pages 40-43,
Zurich, CH; A. LARDELLI: "Ein elektronisches
Mess- und Berechnungssystem für industrielle Anwendungen"**

(73) Titulaire : **FRAMATOME
Tour Fiat 1, Place de la Coupole
F-92400 Courbevoie (FR)**

(72) Inventeur : **Martin, Alain
133 rue Coste
F-69300 Caluire (FR)**

(74) Mandataire : **Bouget, Lucien et al
Cabinet Lavoix 2, Place d'Estienne d'Orves
F-75441 Paris Cédex 09 (FR)**

## Description

L'invention concerne un procédé de remplacement intégral d'un générateur de vapeur usagé d'un réacteur nucléaire à eau sous pression.

Les réacteurs nucléaires à eau sous pression comportent, à l'intérieur d'un bâtiment réacteur, une cuve renfermant le coeur du réacteur, remplie d'eau sous pression ainsi qu'un circuit primaire constitué de plusieurs boucles en communication avec la cuve. Chacune des boucles du circuit primaire comporte un générateur de vapeur dans lequel l'eau sous pression se refroidit en échauffant et en vaporisant de l'eau alimentaire. Les générateurs de vapeur sont disposés dans des locaux appelés casemates ménagés à l'intérieur du bâtiment réacteur.

Les générateurs de vapeur de chacune des boucles sont reliés à la cuve par des canalisations d'arrivée et de sortie d'eau sous pression appelées conduites primaires. Ces conduites sont reliées à la boîte à eau du générateur de vapeur située à sa partie inférieure, par l'intermédiaire de tubulures solidaires de la boîte à eau.

Après un certain temps de fonctionnement, les générateurs de vapeur qui renferment un faisceau de tubes d'échange thermique assurant la séparation entre l'eau primaire et l'eau d'alimentation doivent être contrôlés et, si certains tubes du faisceau présentent des fuites, ces tubes doivent être fermés par un bouchon ou chemisés, pour éviter la contamination de l'eau d'alimentation.

Lorsque le générateur de vapeur a fonctionné pendant une longue durée, il peut s'avérer nécessaire de remplacer tout ou partie des tubes du faisceau.

Cependant, cette opération est complexe si bien qu'on envisage actuellement le remplacement intégral des générateurs de vapeur des réacteurs nucléaires à eau sous pression.

Cette opération de remplacement nécessite un découpage des canalisations primaires au voisinage des tubulures de raccordement du générateur usagé et un soudage des tubulures du générateur de vapeur neuf de remplacement aux canalisations primaires laissées en attente.

Dans le cas du montage d'un générateur de vapeur neuf dans une centrale nucléaire en construction, le générateur de vapeur est mis en place dans la casemate sur des béquilles de supportage vertical puis on effectue son raccordement à la cuve du réacteur et à la pompe primaire de la boucle correspondante, par des éléments de canalisation primaire qui sont assemblés bout à bout. On assure ensuite le calage du générateur de vapeur dans la casemate, en plaçant des dispositifs de supportage autour du générateur de vapeur, en tenant compte des jeux de montage nécessaires lors du fonctionnement à haute température du générateur de vapeur.

Les éléments de canalisation primaire assurant la jonction des composants de la boucle peuvent être adaptés facilement, pour tenir compte de la position relative des composants.

Au contraire, dans le cas du remplacement intégral d'un générateur de vapeur usagé d'un réacteur nucléaire ayant déjà fonctionné, on doit effectuer le raccordement du générateur neuf de remplacement, à une boucle primaire existante sur laquelle est disposé le générateur de vapeur usagé.

Il est théoriquement possible d'envisager de modifier la géométrie de cette boucle, en découpant des longueurs importantes des canalisations primaires assurant la jonction du générateur de vapeur. Cependant, la durée totale des opérations permettant le remplacement du générateur de vapeur risque d'être très longue, ce qui augmente d'autant la durée pendant laquelle le réacteur nucléaire n'est pas disponible. En outre, les canalisations primaires sur lesquelles on effectue des découpages ont été contaminées par le fluide primaire radio-actif, si bien qu'il est nécessaire d'effectuer une décontamination préalable aux interventions sur la canalisation, dans toutes les zones où un découpage doit être effectué.

Il a donc paru préférable de raccorder le générateur de vapeur neuf au circuit primaire, après avoir effectué le découpage d'une longueur minimum des canalisations primaires de raccordement du circuit existant.

Dans la mesure du possible, on n'effectue qu'une seule coupe de chacune des canalisations primaires de raccordement, au voisinage des tubulures du générateur de vapeur usagé.

Après extraction du générateur de vapeur usagé de la casemate, on réalise un usinage des extrémités des canalisations en attente, pour réaliser sur ces extrémités, des chanfreins dans des positions permettant leur mise en coïncidence avec des chanfreins correspondants usinés sur les tubulures du générateur de vapeur neuf.

Il existe d'autre part certaines différences inévitables entre le générateur de vapeur neuf et le générateur de vapeur usagé, en ce qui concerne leur géométrie.

Ces différences ont une influence sur la possibilité et la facilité de mise en oeuvre du procédé de remplacement du générateur de vapeur, dans la mesure où elles affectent les parties du générateur de vapeur venant se raccorder au circuit primaire et les moyens d'appui ou de positionnement du générateur de vapeur venant coopérer avec les moyens de support et de positionnement correspondant qui restent en place dans la casemate.

On ne connaissait pas jusqu'ici de procédé permettant d'assurer le remplacement intégral d'un générateur de vapeur usagé d'un réacteur nucléaire à eau sous pression, avec une détermination précise des coupes à effectuer, de la position des chanfreins de soudage et des modifications à apporter au dispositif de supportage et de maintien.

Le but de l'invention est donc de proposer un procédé de remplacement intégral d'un générateur de vapeur usagé d'un réacteur nucléaire à eau sous pression qui comporte un bâtiment réacteur définissant un local dans lequel le générateur de vapeur est fixé dans une position déterminée, grâce à des dispositifs de supportage et de positionnement placés dans le local et un circuit primaire disposé dans le bâtiment réacteur dans lequel circule de l'eau sous pression, comportant deux canalisations reliées à la partie inférieure du générateur de vapeur, au niveau de tubulures correspondantes solidaires du générateur de vapeur, le procédé consistant à séparer le générateur de vapeur usagé du circuit primaire par découpage des canalisations au voisinage des tubulures du générateur de vapeur, à extraire le générateur de vapeur usagé du local, à mettre en place dans le local un générateur de vapeur neuf de remplacement et à souder les tubulures du générateur de vapeur neuf aux canalisations correspondantes, au niveau de chanfreins de soudage, ce procédé permettant de déterminer de façon sûre la procédure de remplacement, les modifications à apporter aux dispositifs de supportage et de positionnement et la position des chanfreins de soudage sur les canalisations primaires.

Dans ce but :

— on effectue des mesures topométriques sur le générateur de vapeur neuf pour déterminer de façon exacte la position de ses parties de support et de positionnement destinées à venir en appui sur les dispositifs de supportage et de positionnement du local et la géométrie des tubulures de raccordement au circuit primaire,

— on effectue des mesures topométriques dans le local et sur le générateur de vapeur usagé, pour déterminer la géométrie des parties de raccordement du circuit primaire et des dispositifs de support et de positionnement,

— on détermine, par comparaison des mesures topométriques effectuées, la procédure de remplacement à mettre en oeuvre, c'est-à-dire le nombre et la position des coupes à effectuer sur les canalisations primaires et les modifications à effectuer sur les dispositifs de supportage et de positionnement, pour la mise en place du générateur de vapeur neuf,

— on effectue les coupes prévues et l'extraction du générateur de vapeur usagé puis le dressage des surfaces découpées sur les canalisations primaires,

— on effectue des mesures topométriques dans le local après extraction du générateur de vapeur usagé pour déterminer la position exacte des dispositifs de support et de positionnement et des extrémités découpées des canalisations primaires,

— on vérifie par comparaison des mesures effectuées la possibilité de mise en oeuvre de la procédure de remplacement,

— on détermine la position exacte des chanfreins de soudage sur les extrémités des canalisations primaires,

— on usine les chanfreins correspondants, on met en place le générateur de vapeur neuf et ses dispositifs de support et de positionnement et on effectue le soudage des tubulures.

Afin de bien faire comprendre l'invention, on va maintenant décrire, à titre d'exemples non limitatif, en se référant aux figures jointes en annexe, un mode de réalisation du procédé de remplacement suivant l'invention.

La figure 1 est une vue en perspective d'une boucle d'un réacteur nucléaire à eau sous pression sur lequel on effectue un remplacement d'un générateur de vapeur usagé.

La figure 2 est une vue en perspective du générateur de vapeur usagé en place dans son local.

La figure 3 est une vue en perspective du générateur de vapeur en place dans son local montrant les dispositifs de support et de positionnement de ce générateur de vapeur.

La figure 4 est une vue en perspective du générateur de vapeur neuf de remplacement et des dispositifs de mesure topométrique en cours d'utilisation lors d'une première phase du procédé de remplacement.

La figure 5 est une vue schématique des extrémités des canalisations primaires, des dispositifs de supportage et de positionnement du générateur de vapeur et des dispositifs de mesure topométrique en cours d'utilisation pendant une première phase du procédé de remplacement suivant l'invention.

Les figures 6a et 6b sont des vues schématiques en élévation et en coupe partielle du générateur de vapeur et des dispositifs de supportage et de positionnement de ce générateur.

La figure 7a est une vue en élévation schématique de la partie inférieure du générateur de vapeur et des canalisations du circuit primaire, montrant les différentes possibilités de coupe de ces canalisations.

La figure 7b est une vue de dessus correspondant à la figure 7a.

La figure 8 est une vue en élévation et en coupe partielle d'un dispositif de supportage vertical du générateur de vapeur.

La figure 9 est une vue en plan de la casemate du générateur de vapeur montrant les canalisations primaires en attente et les dispositifs de supportage et de positionnement du générateur de vapeur.

La figure 9a est une vue en plan des dispositifs de support et de positionnement du générateur de vapeur destinés à coopérer avec les dispositifs correspondants placés dans la casemate.

La figure 10 est une vue en élévation d'un gabarit de montage associé à l'extrémité inférieure du générateur de vapeur.

La figure 11 est une vue de dessous suivant 11 de la figure 10.

La figure 12 est une vue en coupe à plus grande échelle d'une partie du gabarit représenté sur la figure 10, en position sur le générateur de vapeur de remplacement.

La figure 13 est une vue en coupe de la même partie du gabarit en position à l'extrémité d'une canalisation primaire.

La figure 14 est une vue en perspective d'une partie du gabarit constituant un pied de positionnement de ce gabarit dans la casemate du générateur de vapeur.

La figure 15 est une vue de dessus du pied de positionnement représenté sur la figure 14.

La figure 16 est une vue en coupe du pied de positionnement représenté sur les figures 14 et 15, lors de son réglage sur le générateur de vapeur neuf de remplacement.

La figure 17 est une vue en élévation d'une machine d'usinage de chanfrein en position de travail à l'extrémité d'une canalisation primaire.

La figure 18 est une vue de dessus suivant 18 de la figure 17.

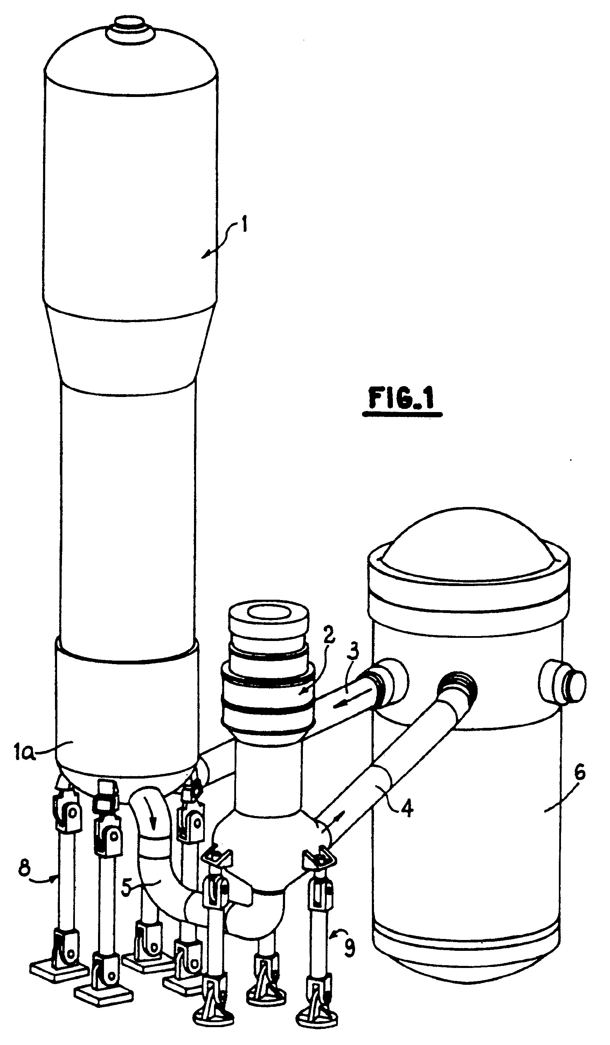

Sur la figure 1, on voit une boucle du circuit primaire d'un réacteur nucléaire à eau sous pression comportant un générateur de vapeur 1, une pompe primaire 2 et des canalisations primaires 3 et 4 permettant de relier la cuve 6 du réacteur au générateur de vapeur et à la pompe primaire, respectivement ainsi qu'une canalisation 5 permettant de relier le générateur de vapeur 1 à la pompe primaire 2. Les canalisations primaires 3 et 5 sont reliées à la partie inférieure 1a du générateur de vapeur constituant une boîte à eau.

L'eau sous pression de refroidissement du réacteur est mise en circulation dans la boucle par la pompe primaire 2. L'eau échauffée au contact du coeur disposé dans la cuve 6 du réacteur parvient à la boîte à eau 1a du générateur de vapeur par la canalisation primaire 3 appelée branche chaude. L'eau circule ensuite dans les tubes du générateur de vapeur où elle se refroidit en échauffant et en vaporisant de l'eau d'alimentation. L'eau refroidie revient ensuite dans la partie de sortie de la boîte à eau 1a puis est renvoyée à la cuve du réacteur par les canalisations 5 et 4, la canalisation 4 constituant la branche froide. La canalisation 5 qui assure la jonction entre le générateur de vapeur 1 et la pompe primaire 2 a la forme d'un U et, pour cette raison, est désignée sous le node branche en U. Le générateur de vapeur 1 et la pompe primaire 2 sont placés avec leurs axes verticaux et reposent sur des ensembles de béquilles articulés 8 et 9, respectivement.

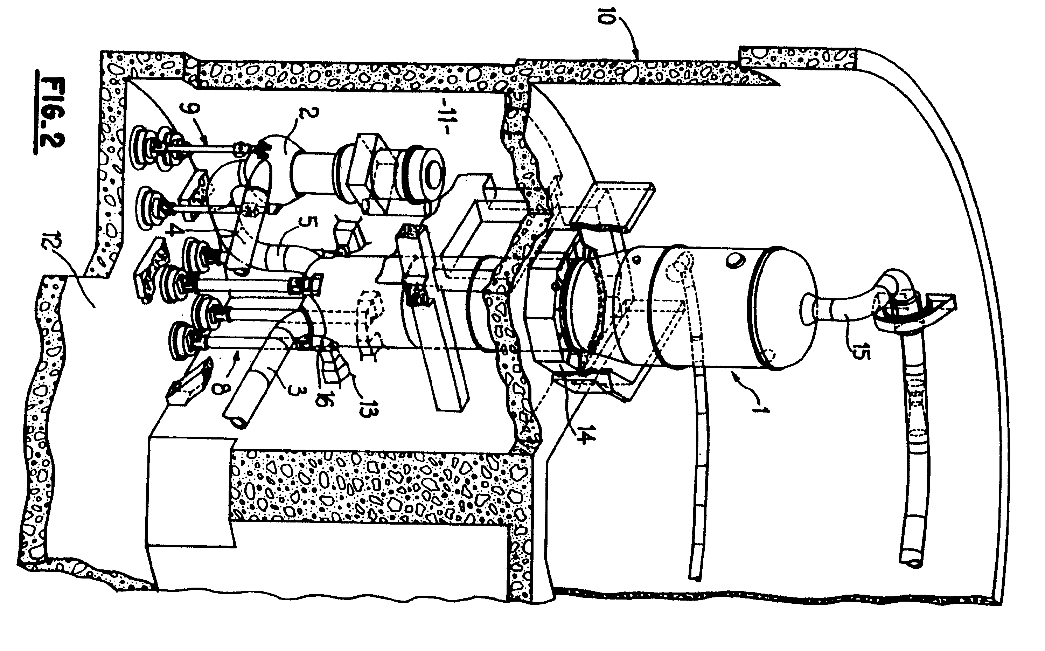

Sur la figure 2, on voit une partie du bâtiment réacteur 10 qui renferme la cuve 6 et l'ensemble du circuit primaire du réacteur.

Sur la partie du bâtiment réacteur 10 représentée sur la figure 2, on voit un local 11 ou casemate destiné à recevoir un générateur de vapeur 1. Le générateur de vapeur repose sur le plancher 12 de la casemate 11 par l'intermédiaire des béquilles articulées 8. Le centrage et le positionnement du générateur de vapeur 1 dans la casemate 11 sont assurés au niveau de ceintures 13 et 14, la ceinture 13 étant constituée par six butées latérales 17 fixées sur trois des murs de la casemate.

L'enveloppe du générateur de vapeur 1 est reliée à sa partie supérieure à une conduite 15 d'évacuation de la vapeur.

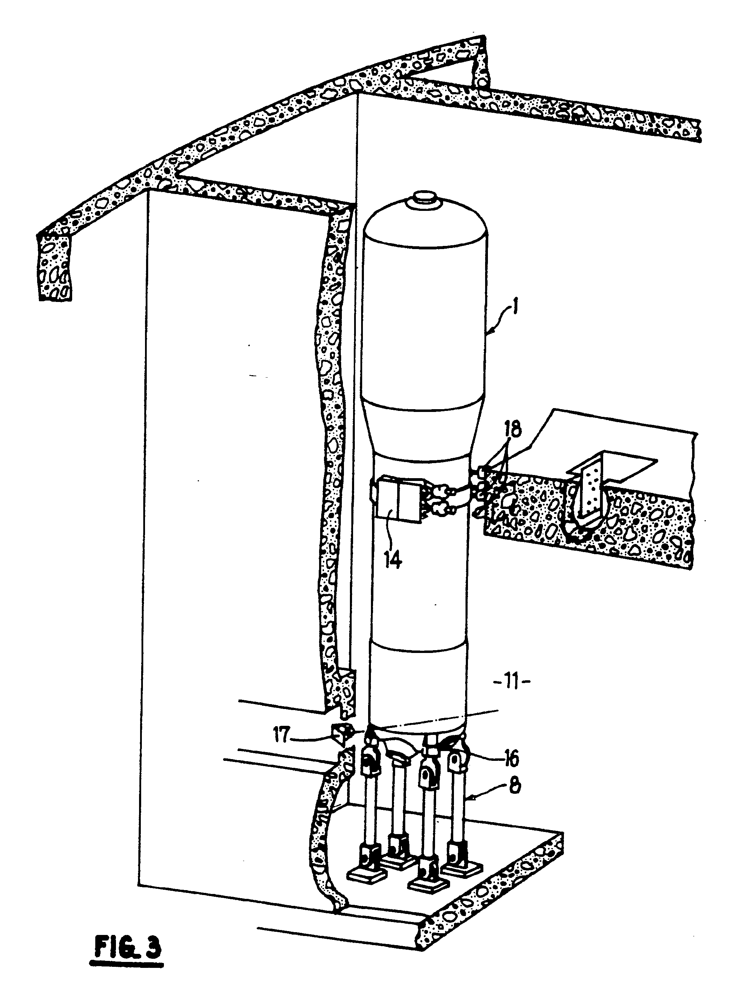

Comme il est visible sur les figures 2 et 3, le générateur de vapeur 1 comporte, au droit de chacune des béquilles de l'ensemble de supportage 8, un patin de butée 16 destiné à assurer le supportage horizontal du générateur de vapeur 1, en association avec une butée 17 fixée sur la paroi de la casemate 11. Des dispositifs d'appui 18 constitués par des amortisseurs sont ancrés dans un plancher intermédiaire de la casemate 11, au niveau de la ceinture supérieure 14. Ces amortisseurs 18 viennent en appui sur la ceinture 14 et assurent de même que les ensembles 16, 17 le supportage horizontal et le maintien du générateur de vapeur dans sa casemate.

Les dispositifs de supportage horizontal de même que les béquilles 8 permettent un certain débattement du générateur de vapeur à l'intérieur de sa casemate, un certain déplacement du corps du générateur de vapeur étant possible, dans des limites autorisées, au cours de son fonctionnement.

Le générateur de vapeur 1 représenté sur les figures 1, 2 et 3 est un générateur de vapeur usagé dont le faisceau tubulaire disposé à l'intérieur du corps a subi une certaine dégradation en service, si bien qu'on désire effectuer le remplacement intégral de ce générateur de vapeur.

Dans ce but, on a réalisé en usine la fabrication d'un générateur de vapeur neuf de remplacement qu'il s'agit de substituer au générateur de vapeur 1.

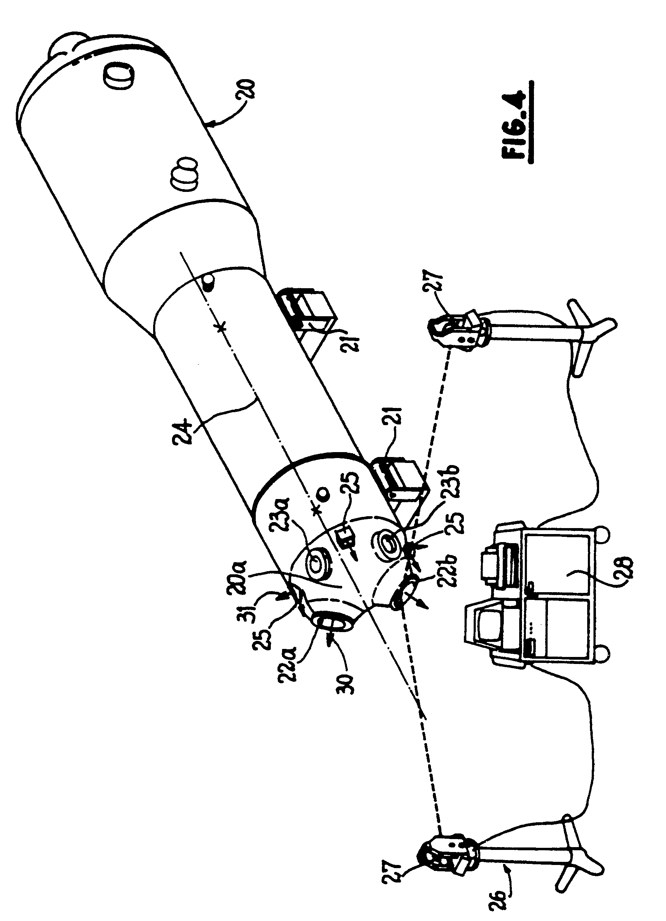

Ce générateur de vapeur neuf de remplacement 20 est représenté sur la figure 4, en position horizontale sur des dispositifs de supportage 21. La partie inférieure 20a du générateur 20 constituant la boîte à eau comporte deux tubulures 22a et 22b destinées à être raccordées aux canalisations primaires 3 et 5 de la boucle représentée sur les figures 1, 2 et 3, après enlèvement du générateur de vapeur usagé 1. Le fond 20a du générateur de vapeur est également percé d'ouvertures 23a et 23b constituant des ouvertures de visite ou trous d'homme permettant d'accéder à la partie intérieure de la boîte à eau.

La paroi externe de la partie inférieure 20a du générateur de vapeur comporte des parties en saillies 25 constituant des pieds de support du générateur de vapeur.

Avant d'effectuer le remplacement d'un générateur de vapeur usagé par un générateur neuf tel que le générateur 20, on effectue en usine certaines mesures topométriques comme il est représenté sur la figure 4. Le générateur de vapeur 20 est disposé avec son axe 24 dans une position sensiblement horizontale et une installation de mesure topométrique 26 est disposée au voisinage de la partie inférieure 20a du générateur de vapeur pour effectuer des mesures de grande précision. L'installation de mesure topométrique de type classique comporte des lunettes de visée 27 et un ensemble 28 de traitement, d'enregistrement et de visualisation des mesures.

Les mesures topométriques effectuées sont relatives à la position et à l'orientation de l'axe 24 du générateur de vapeur et, comme il est indiqué par les flèches 30 et 31, à la position et à l'orientation des tubulures 22a, 22b et des faces d'appui des pieds 25.

Des mesures topométriques sont également effectuées sur d'autres parties du générateur de vapeur, pour déterminer la position exacte des zones d'appui de la ceinture supérieure et de la tubulure de raccordement à la conduite de vapeur 15.

D'autres mesures topométriques sont effectuées sur le générateur de vapeur usagé, à l'intérieur de la casemate 11 dans laquelle est disposé ce générateur de vapeur. Les mesures topométriques qui sont effectuées en utilisant une installation du type de celle représentée sur la figure 4 permettent de déterminer avec précision la position des tubulures de raccordement des canalisations primaires au générateur de vapeur usagé et la position des surfaces d'appui et de supportage horizontales et verticales.

Les mesures topométriques sont enregistrées et comparées aux mesures topométriques effectuées sur le générateur de vapeur neuf de remplacement.

Cette comparaison permet de déterminer, de façon prévisionnelle, la procédure de remplacement du générateur de vapeur, c'est-à-dire le nombre et la position des coupes à réaliser sur les canalisations primaires et les modifications à apporter aux dispositifs de supportage vertical et horizontal.

Le système d'axes de référence dans lequel on détermine la position des divers éléments de raccordement, d'appui et de positionnement du générateur de vapeur comporte un premier axe OX horizontal correspondant à l'axe de la branche chaude 3 et un second axe horizontal OY perpendiculaire au premier situé dans le plan vertical contenant l'axe de la branche en U 5, ces deux axes se coupant sur l'axe vertical du générateur. Le troisième axe OZ du système de référence est confondu avec l'axe du générateur de vapeur si celui-ci est parfaitement vertical.

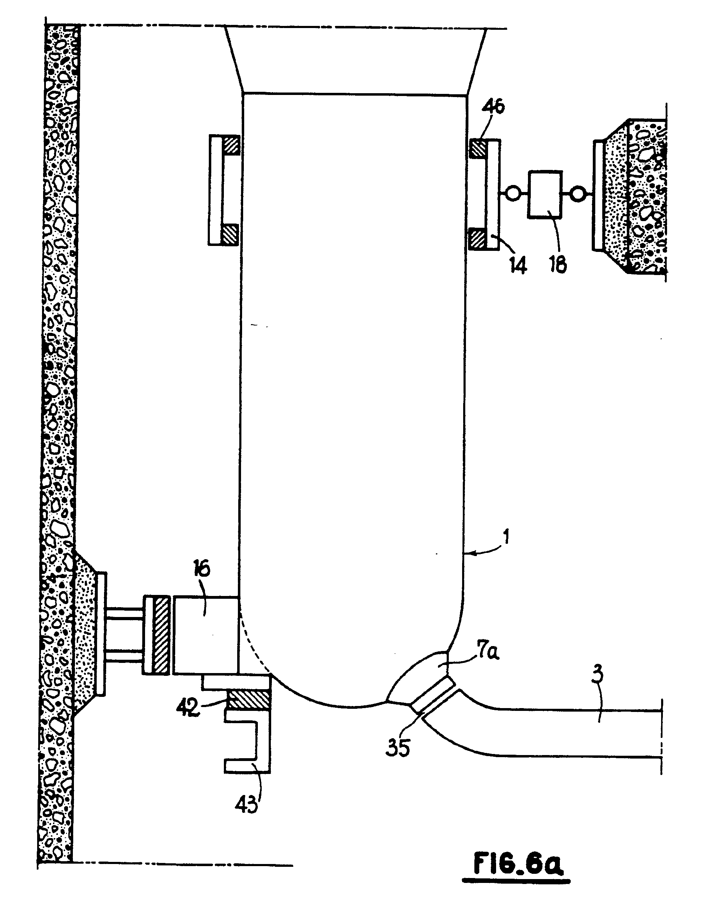

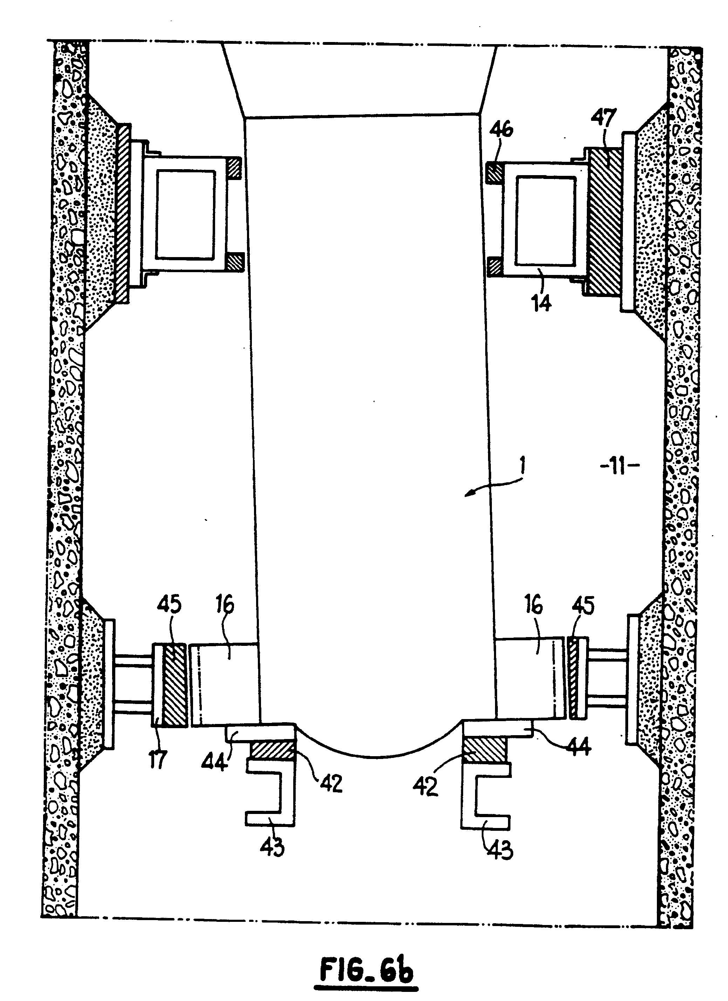

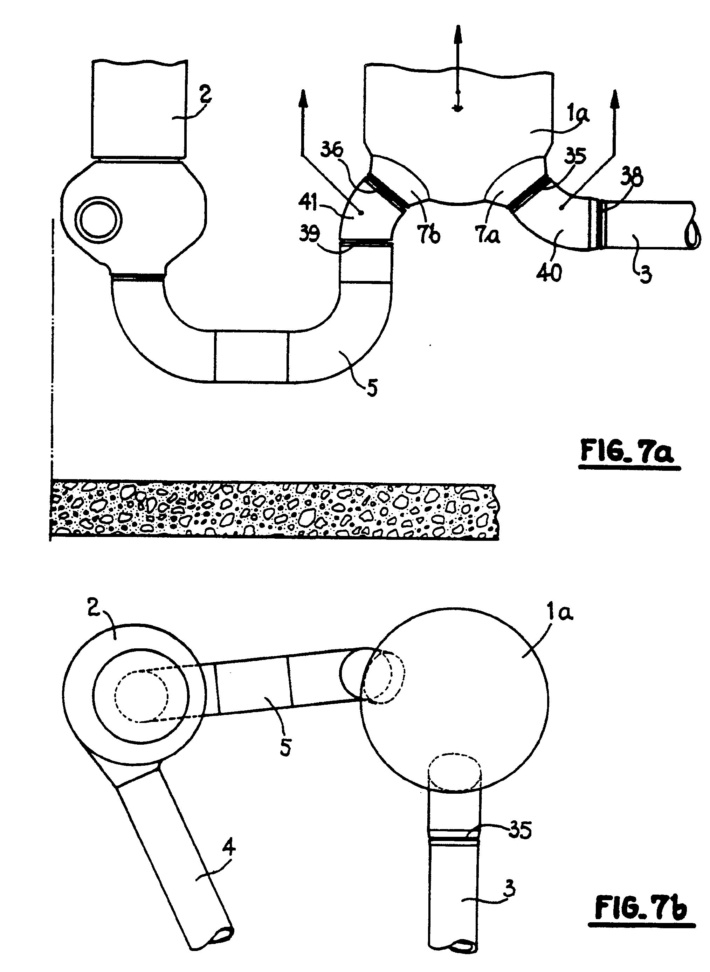

On va maintenant se reporter aux figures 6a, 6b, 7a et 7b pour indiquer les principes directeurs conduisant à la détermination de la procédure du remplacement du générateur de vapeur.

La figure 6a est une vue schématique en élévation du générateur de vapeur, suivant la direction perpendiculaire à l'axe de la branche chaude. La figure 6b est une vue suivant une direction parallèle à l'axe de la branche chaude.

Sur les figures 6a, 7a et 7b, on voit plusieurs exemples de coupes qui peuvent être réalisées sur la branche chaude 3 et sur la branche en U 5, pour séparer le générateur de vapeur usagé 1 du circuit primaire.

Le principe directeur conduisant au choix des coupes consiste à réaliser la coupe le plus près possible de la tubulure de raccordement correspondante (7a ou 7b), tout en ayant la possibilité de venir raccorder ultérieurement le générateur de vapeur neuf aux extrémités des canalisations primaires laissées en attente.

La coupe doit permettre également d'éliminer la zone d'acier ferritique des tuyauteries primaires au voisinage des soudures de raccordement du générateur de vapeur usagé.

Sur les figures 6a, 7a et 7b, on a représenté une coupe 35 permettant de séparer la branche chaude de la tubulure 7a correspondante du générateur de vapeur. Sur la figure 7a est également visible la coupe 36 permettant de séparer la seconde tubulure 7b de la branche en U 5.

La comparaison des mesures topométriques effectuées précédemment a tout d'abord pour rôle de déterminer si deux coupes telles que 35 et 36 sont suffisantes pour permettre le raccordement du générateur de vapeur neuf, étant donnée sa géométrie déterminée par mesure topométrique, aux extrémités des canalisations primaires 3 et 5 laissées en attente après réalisation des coupes 35 et 36 et extraction du générateur de vapeur 1 de sa casemate 11.

Une des possibilités est donc la détermination d'une procédure comportant uniquement deux coupes 35 et 36.

La comparaison des mesures topométriques peut également révéler l'impossiblité de réaliser le raccordement du générateur de vapeur neuf en effectuant simplement les deux coupes 35 et 36. Il est alors nécessaire, après l'extraction du générateur 1 de sa casemate, de réaliser deux nouvelles coupes 38 et 39 permettant de séparer les coudes 40 et 41 des canalisations primaires correspondantes, ces coudes 40 et 41 étant ensuite remplacés par deux coudes de géométrie différente qui sont soudés à l'extrémité des canalisations 3 et 5. Ces nouveaux coudes permettent une adaptation à la géométrie du fond du générateur de vapeur de remplacement 20.

Les coupes 35 et 36 et éventuellement les coupes 38 et 39 sont effectuées par une machine de découpage orbital mise en place après décontamination de la zone à découper.

La comparaison des mesures topométriques effectuées sur le générateur de vapeur neuf de remplacement 20 et des mesures topométriques effectuées sur le générateur de vapeur usagé et sur le circuit primaire permet également de déterminer les modifications à apporter aux dispositifs de calage et de positionnement du générateur de vapeur.

Ces dispositifs de calage et de positionnement sont représentés de façon schématique sur les figures 6a et 6b.

Ces dispositifs comportent tout d'abord des cales de réglage vertical 42 qui sont intercalées entre des plaques d'appui 44 fixées sur les pieds du générateur de vapeur 1 et les chandelles 43 constituant la partie supérieure des béquilles 8 de supportage du générateur de vapeur.

On voit que les cales de réglage 42 peuvent être usinées avec des faces légèrement inclinées l'une par rapport à l'autre pour effectuer un rattrapage d'orientation de l'axe du générateur de vapeur.

Les dispositifs d'appui et de positionnement comportent également des cales de réglage 45 intercalées entre les patins 16 du générateur de vapeur fixé sur les plaques d'appui 44 et les butées 17 fixées sur les parois de la casemate 11 du générateur de vapeur.

Enfin, ces dispositifs comportent des cales 46 intercalées entre l'anneau 14 et le corps du générateur de vapeur 1 et des cales 47 intercalées entre la ceinture 14 et des plaques d'appui fixées sur les parois de la casemate 11.

La dimension et la forme de ces cales peuvent être déterminées de façon prévisionnelle par la comparaison des mesures topométriques.

Cette détermination devra tenir compte des jeux fonctionnels à réserver entre le générateur de vapeur et ses appuis.

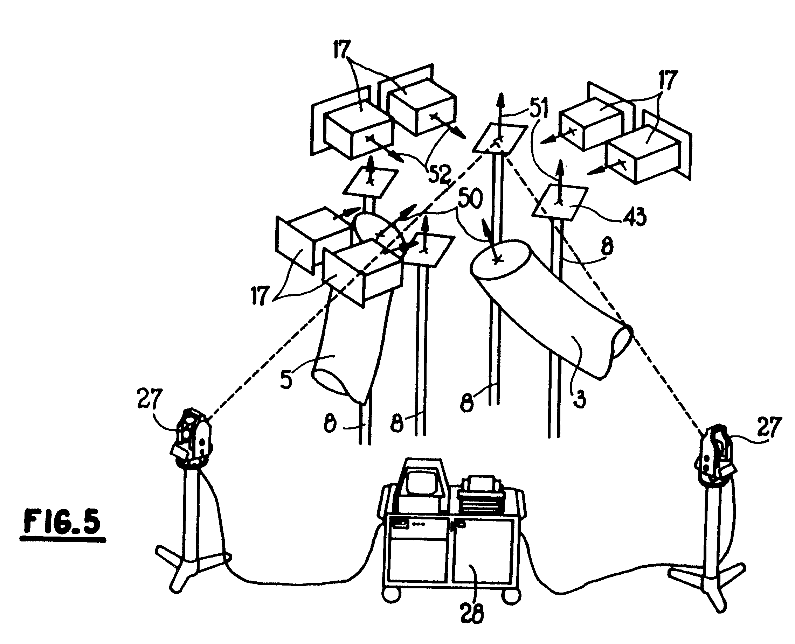

Sur la figure 5, on voit des éléments de raccordement de supportage et d'appui laissés en attente dans la casemate du générateur de vapeur, après enlèvement du générateur de vapeur usagé.

On effectue des mesures topométriques sur ces éléments grâce à une installation du même type que celle représentée sur la figure 4 et comportant des lunettes de visée 27 et un ensemble de traitement, d'enregistrement et de visualisation des mesures 28.

Ces mesures sont effectuées après avoir bridé les canalisations primaires dans la position qu'elles doivent occuper après soudage du générateur de vapeur neuf.

Les mesures topométriques portent sur la position et l'orientation des plans de raccordement des canalisations primaires 3 et 5 et des plans d'appui des dispositifs de supportage vertical 43 et de supportage horizontal 17. Ces positions et orientations mesurées sont indiquées sur la figure 5 par les flèches 50, 51 et 52.

Il est à noter, qu'avant d'effectuer les mesures topométriques sur l'extrémité des canalisations 3 et 5 pour déterminer la position des plans de rac-cordement, on effectue un dressage de ces faces d'extrémité des canalisations, après leur découpage.

Le résultat des mesures topométriques effectuées dans la casemate 11 après enlèvement du générateur de vapeur usagé est comparé au résultat des mesures topométriques effectuées sur le générateur de vapeur neuf de remplacement. De cette comparaison, on déduit la position exacte du plan de raccordement entre les tubulures 22a et 22b du générateur neuf et la partie d'extrémité des canalisations correspondantes 3 et 5. Cette détermination se traduit par le tracé d'une ligne circulaire sur la surface extérieure des canalisations 3 et 5.

Nous verrons ci-dessous que ce tracé peut être effectué ou vérifié en utilisant un gabarit reproduisant les éléments principaux du fond du générateur de vapeur.

La comparaison des mesures permet également de déterminer avec une meilleure précision que précédemment, la forme à donner aux éléments de calage et aux patins du générateur de vapeur, en fonction de la géométrie du générateur de vapeur neuf 20 et des appuis 17 et 43 laissés en attente dans la casemate du générateur de vapeur.

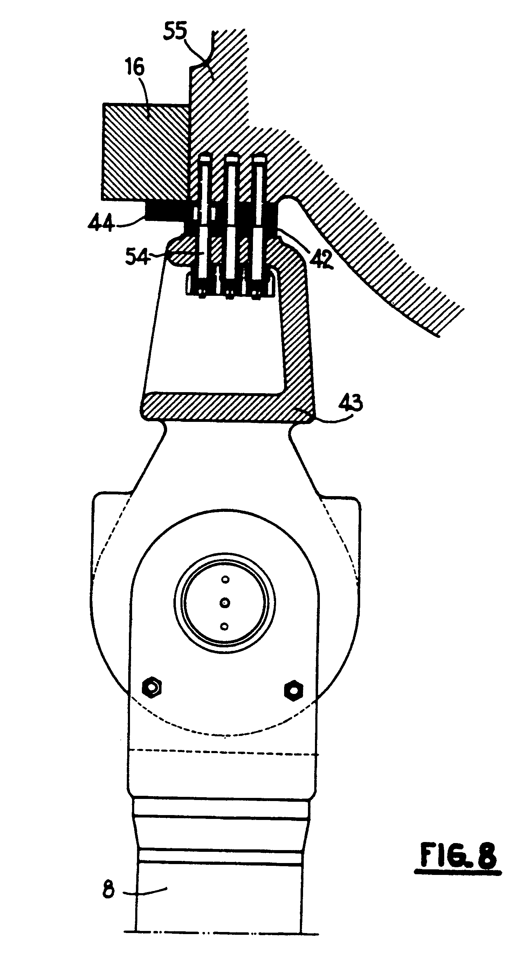

Sur la figure 8, on voit la partie d'extrémité d'une béquille 8 comportant une chandelle d'appui 43 percée de trous traversés par des vis d'assemblage 54. Les vis d'assemblage 54 traversent des trous placés en coïncidence dans la cale de réglage vertical 42 et dans la plaque d'appui 44 et sont vissées dans des trous taraudés prévus dans le pied 55 correspondant du générateur de vapeur. Le patin 16 est fixé par des vis à la plaque d'appui 44 débordante par rapport au pied 55.

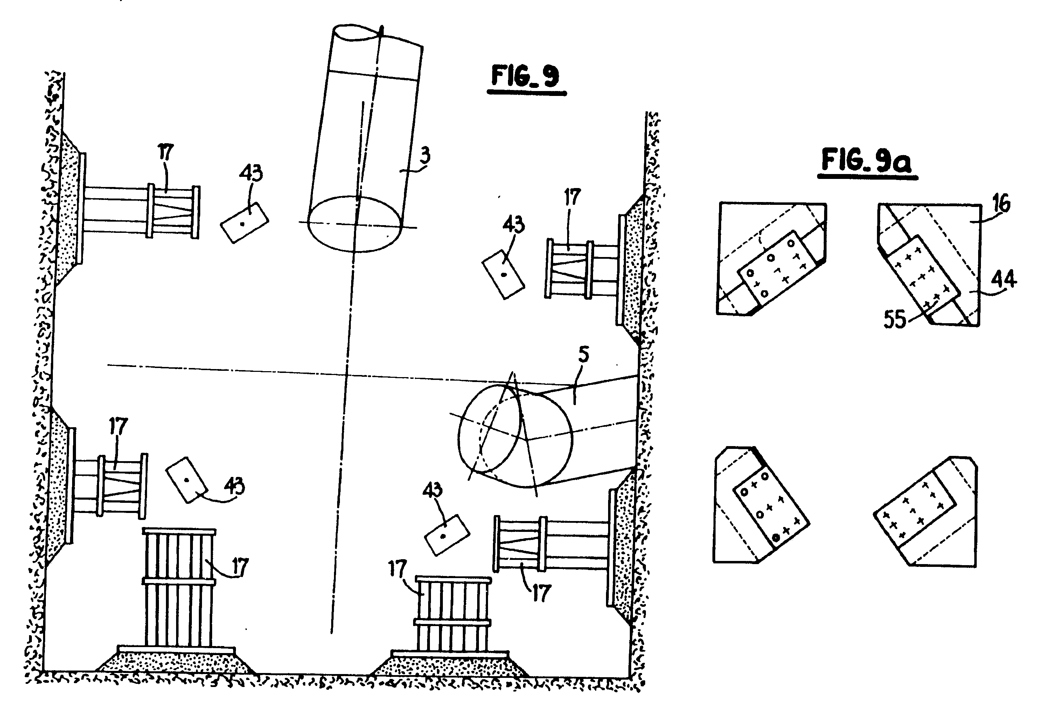

Sur la figure 9 où ont été représentés les éléments en attente dans la casemate du générateur de vapeur, on voit la répartition en plan des butées d'appui 17 coopérant avec les patins 16 du générateur de vapeur, pour son supportage horizontal et les surfaces d'appui des chandelles 43 sur lesquelles viennent se placer les pieds 55 du générateur de vapeur.

Sur la figure 9a, on a représenté en plan les patins 16 et les pieds correspondants 55 du générateur de vapeur.

La comparaison des mesures topométriques effectuées sur les éléments en attente et sur le générateur de vapeur neuf permet de déterminer la forme exacte des patins 16 et des cales de réglage vertical et horizontal associés au pied du générateur de vapeur.

On dispose donc, après les étapes du procédé qui ont été décrites, des moyens pour équiper le générateur de vapeur neuf de remplacement de dispositifs d'appui adaptés à son montage dans la casemate du générateur de vapeur usagé.

La comparaison des mesures topométriques a également permis de tracer les plans de raccordement exacts sur les canalisations 3 et 5 laissées en attente.

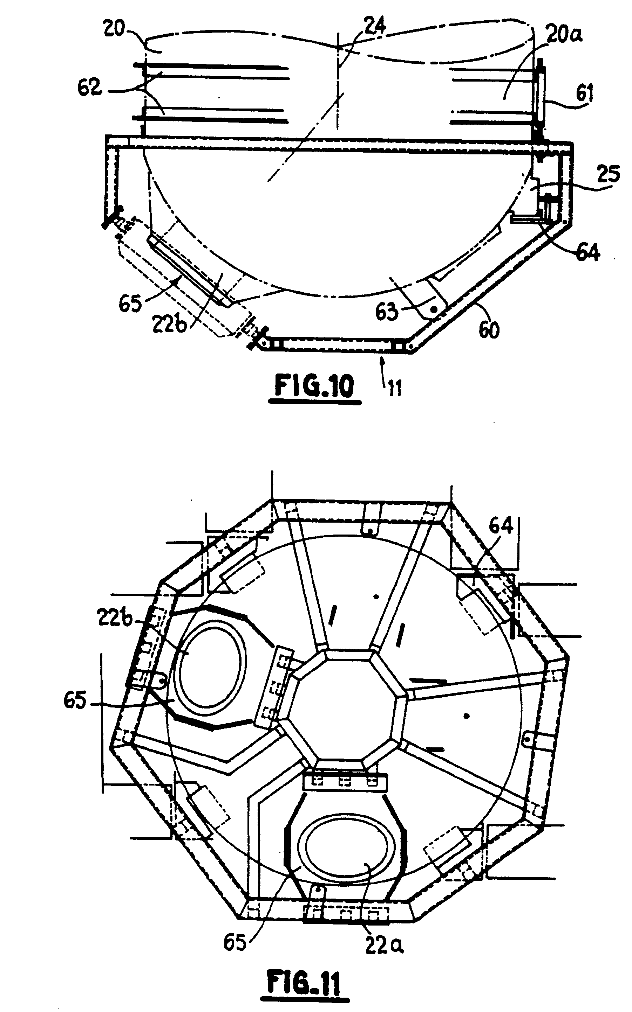

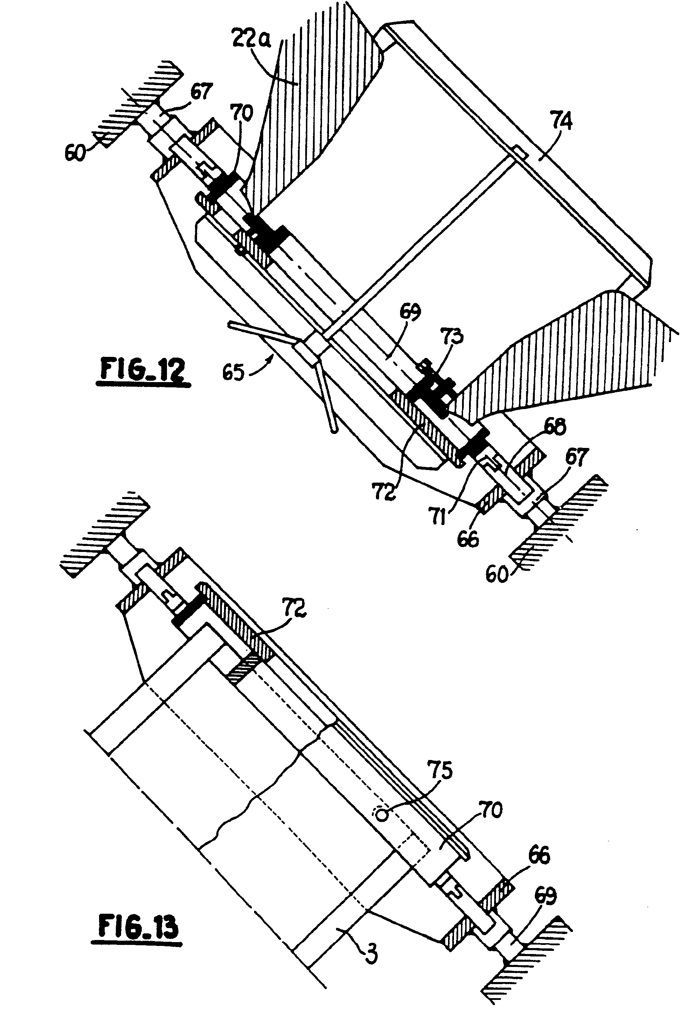

Avant d'effectuer l'usinage des chanfreins de soudage sur les canalisations laissées en attente matérialisant par leurs faces d'extrémité le plan de raccordement, on effectue cependant une vérification en utilisant un gabarit de montage tel que représenté sur les figures 10 et 11.

Un tel gabarit comporte une structure mécanosoudée 60 en forme de tronc de pyramide dont la base polygonale comporte une ouverture d'une dimension suf-fisante pour permettre le passage de la partie inférieure 20a du générateur de vapeur. Le gabarit de montage 60 comporte des éléments de fixation 61 permettant son accrochage sur deux anneaux de fixation 62 eux-mêmes fixés sur la surface extérieure du générateur de vapeur.

Dans un premier temps, le gabarit de montage est mis en position et fixé grâce aux dispositifs 61, 62 grâce à des pattes 63, sur le fond du générateur de vapeur neuf 20 devant assurer le remplacement du générateur de vapeur usagé extrait de la casemate 11.

Lorsque la mise en place de la structure du gabarit de montage sur le fond du générateur de vapeur est assurée de façon que l'axe du gabarit soit parfaitement confondu avec l'axe 24 du générateur de vapeur, on assure la fixation sur ce gabarit 60 de dispositifs 64 et 65 destinées à concrétiser la position des patins et des cales d'appui sur le gabarit reproduisant le fond du générateur de vapeur et à tracer ou à vérifier la ligne circulaire représentant le plan de raccordement sur les canalisations primaires.

Pour effectuer le tracé ou la vérification du plan de raccordement, on utilise deux dispositifs 65 qui sont mis en place sur le gabarit dans des positions correspondant aux tubulures 22a et 22b et dont la structure est représentée sur les figures 12 et 13.

Sur la figure 12, le dispositif 65 a été représenté à l'issue de son positionnement au niveau d'une tubulure, par exemple la tubulure 22a de raccordement à la branche chaude. Cette position correspond à la position du gabarit représenté sur les figures 10 et 11, où ce gabarit 60 est mis en place sur l'extrémité inférieure du générateur de vapeur neuf.

Le dispositif 65 comporte une couronne externe 66 sur laquelle sont soudés deux éléments de fixation 67 de direction radiale.

Des trous d'axe sont usinés dans la couronne externe 66 et dans les pièces de fixation 67. Deux tourillons 68 sont montés rotatifs autour de l'axe 69 dans les trous d'axe. Une couronne interne 70 est montée rotative autour de l'axe 69, à l'intérieur de la couronne externe 66, grâce à des bouts d'axe démontables 71. La couronne interne 70 porte un anneau de réglage 72 sur lequel sont montés des ensembles de centrage et de réglage à vis 73. On assure le positionnement et le centrage parfaits du dispositif par rapport à l'extrémité de raccordement de la tubulure 22a, grâce aux dispositifs 73, lorsque le gabarit est en place sur le générateur de vapeur neuf. Un étrier de blocage 74 permet de maintenir en place le dispositif 65, dans sa position de réglage, pendant qu'on assure sa fixation par soudage sur le gabarit 60.

Lorsque les deux dispositifs 65 correspondant aux tubulures 22a et 22b du générateur de vapeur neuf sont mis en place et fixés sur le gabarit, le plan perpendiculaire à l'axe de la tubulure 22a passant par l'axe 69 du dispositif 65 matérialise parfaitement le plan de raccordement de la tubulure à la canalisation primaire laissée en attente dans la casemate du générateur de vapeur.

Lorsque le gabarit de montage est mis en place sur la partie inférieure du générateur de vapeur, comme représenté sur les figures 10 et 11, on effectue également le montage de pieds de centrage destinés à matérialiser la position des pieds et des patins du générateur de vapeur à mettre en place.

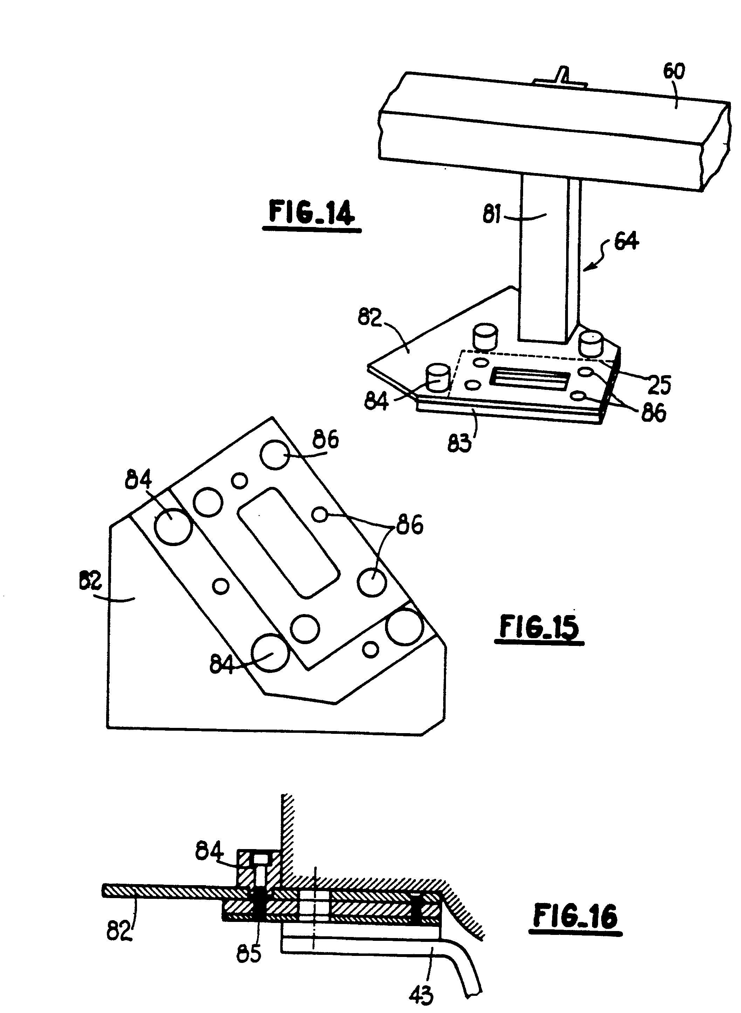

Un tel pied 64 a été représenté sur les figures 14, 15 et 16. Le pied 64 comporte un montant 81 destiné à assurer son raccordement au gabarit 60 et une plaque 82 ou faux patin dont la section en plan reproduit exactement la forme et les dimensions d'un patin du générateur de vapeur neuf tel que définies par les mesures topométriques et permettant un calage horizontal parfait du générateur de vapeur de remplacement dans la casemate 11 du générateur de vapeur usagé. La forme de ces faux patins en plan reproduit donc sensiblement les formes des patins 16 représentés sur la figure 9a.

La plaque d'appui 82 est solidaire sur sa face inférieure d'une cale de réglage vertical 83 destinée à matérialiser sur le gabarit la cale de réglage définitif telle que la cale 42 représentée sur la figure 8. La plaque 82 et la cale 83 sont destinées à remplacer sur le gabarit la plaque d'appui 44 et la cale 42 représentées sur la figure 8.

La plaque 82 porte également trois plots 84 par l'intermédiaire de vis 85 dont la position est réglée pour assurer un positionnement du pied 64 contre le pied 25 correspondant du générateur de vapeur neuf dont la trace est représentée en pointillés sur la figure 14.

Des trous de passage de goujons 86 traversent la plaque 82 et la cale 83 sur toute son épaisseur. Lorsque le pied 64 est mis en coïncidence avec un pied 25 du générateur neuf, grâce aux plots 84, les trous 86 permettent d'assurer le passage de goujons d'assemblage du pied 64 du gabarit avec le pied 25 du générateur de vapeur neuf. Le gabarit étant en place sur le générateur de vapeur neuf, comme représenté aux figures 10 et 11, on effectue le montage des quatre pieds 64 sur les pieds correspondants 25 du générateur de vapeur puis on assure la fixation de ces pieds sur le gabarit par l'intermédiaire des montants 81 qui sont fixés de façon rigide sur ce gabarit 60.

Le gabarit est alors prêt pour être transporté dans la casemate du générateur de vapeur usagé, pour vérifier la position des plans de raccordement et des surfaces d'appui déterminée par mesures topométriques.

Les étriers 74 des dispositifs 65 sont démontés, les goujons d'assemblage sur les pieds du générateur de vapeur sont dévissés et le gabarit est séparé du générateur de vapeur neuf. Les dispositifs de centrage et de positionnement 73 des ensembles 65 sont démontés et on assure le pivotement sur 180° de la couronne intérieure 70, 72 des dispositifs 65, cette couronne interne 70, 72 étant mise et maintenue dans sa seconde position représentée sur la figure 13.

Le gabarit de montage 60 est amené dans la casemate 11 du générateur de vapeur usagé et mis en place dans la position exacte que doit occuper le fond du générateur de vapeur neuf 20. Dans cette position, les faux patins 82 des pieds 64 viennent se loger dans les espaces réservés entre les butées 17 et les emplacements des pieds 25 du générateur de vapeur viennent se superposer avec les surfaces d'appui des chandelles 43 des béquilles 8. On vérifie la mise en coïncidence des trous de goujons 86 avec les trous prévus dans les chandelles 43 et la mise en place parfaite du gabarit de montage 60 représentant la partie inférieure du générateur de vapeur neuf 20.

Les dispositifs 65 matérialisant les plans de raccordement viennent se placer sur les extrémités de canalisations primaires de la façon représentée sur la figure 13. L'anneau de réglage 72 de chacun des dispositifs 65 comporte quatre canons 75 de passage de pointeaux permettant le traçage d'une ligne circulaire sur la surface externe de la canalisation 3 (ou 5), cette ligne circulaire matérialisant parfaitement la position du plan de raccordement de la tubulure correspondante 22a (ou 22b) avec la canalisation.

On peut soit effectuer ainsi le tracé de la ligne matérialisant le plan d'extrémité du chanfrein de soudage soit vérifier la position d'une ligne tracée antérieurement, en utilisant les résultats de mesures topométriques.

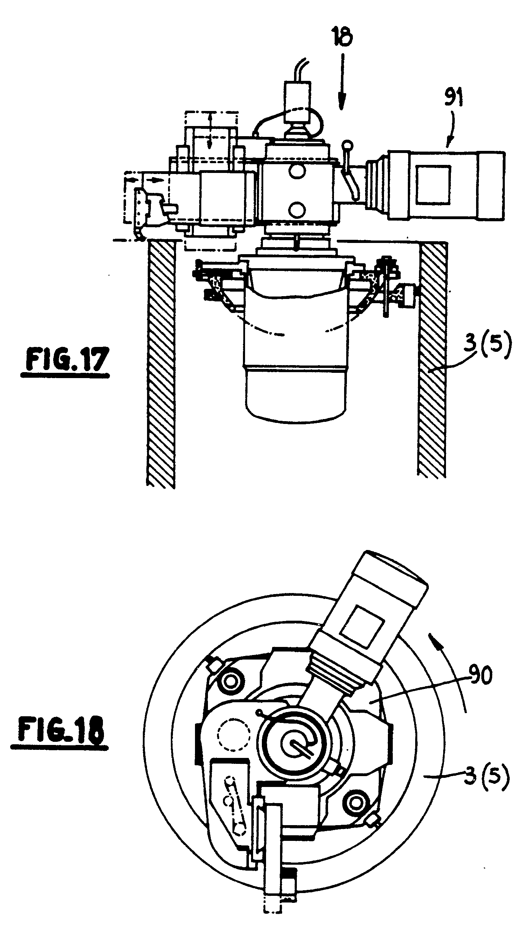

Lorsque les vérifications ont été effectuées, on réalise l'usinage d'un chanfrein de soudage à l'extrémité des canalisations 3 et 5, en utilisant une machine d'usinage de chanfreins de type orbital telle que représentée sur les figures 17 et 18. Une telle machine comporte une partie fixe 90 qui peut être centrée à l'intérieur de la canalisation 3 (ou 5) et une partie 91 mobile en rotation par rapport à la partie 90, autour d'un axe dont le positionnement est défini lors du centrage et du positionnement de la partie 90 à l'intérieur de la canalisation 3 (ou 5).

Le réglage de la position de travail de la machine d'usinage du chanfrein de soudage sur chacune des canalisations pourra être effectué de façon avantageuse, en utilisant le dispositif de réglage décrit dans une demande de brevet Français de la Société FRAMATOME déposée le même jour que la présente demande de brevet.

En effet, les résultats des mesures topométriques et/ou le tracé effectué grâce au gabarit de montage permettent de déterminer la position du chanfrein et de son axe correspondant à l'axe d'usinage de la machine 90, 91. Cet axe est généralement distinct de l'axe de la tuyauterie, aussi bien en ce qui concerne son orientation que sa position par rapport à la section usinée.

Lorsque l'usinage des chanfreins est réalisé sur les extrémités de chacune des canalisations primaires 3 et 5, on met en place le générateur de vapeur neuf de remplacement dans la casemate 11, à la place du gabarit, ce générateur venant se mettre parfaitement en place dans les dispositifs de support vertical et entre les butées de supportage horizontal. De même, les plans de raccordement des tubulures correspondent parfaitement aux plans de raccordement des chanfreins usinés sur les canalisations primaires.

On peut alors effectuer le raccordement par soudage, par exemple grâce à un procédé de soudage TIG orbital tel que décrit dans la demande de brevet Français 87-00590 déposée par la Société FRAMATOME.

De manière avantageuse, après leur découpage, les canalisations primaires sont bridées dans les positions qu'elles doivent occuper après soudage. On tient compte dans cette mise en position par bridage du retrait accompagnant le soudage.

Le procédé suivant l'invention permet donc un remplacement intégral d'un générateur de vapeur usiné en déterminant parfaitement la procédure de remontage, les modifications à faire subir aux dispositifs de supportage et la position des plans de raccordement du générateur de vapeur aux canalisations primaires.

L'invention ne se limite pas au mode de réalisation qui a été décrit. C'est ainsi que les différents éléments de positionnement et de calage utilisés pourront être adaptés aux éléments de positionnement et de calage du générateur de vapeur usagé dont on assure le remplacement, suivant la procédure de remplacement choisie.

On n'a pas décrit de façon précise le mode de raccordement du générateur de vapeur à des éléments tels la tuyauterie d'évacuation de la vapeur. De tels éléments ont une position moins critique que les canalisations primaires ou les moyens de supportage ou de calage inférieurs et leur adaptation de raccordement ne pose pas de problème particulier, une fois que le supportage, le calage et le raccordement de la partie inférieure du générateur de vapeur ont été réalisés.

Enfin, le procédé suivant l'invention s'applique au remplacement de tout générateur de vapeur d'un réacteur nucléaire à eau sous pression.

## Revendications

1. Procédé de remplacement intégral d'un générateur de vapeur usagé (1) d'un réacteur nucléaire à eau sous pression qui comporte un bâtiment réacteur (10) définissant un local (11) dans lequel le générateur de vapeur (1) est fixé dans une position déterminée grâce à des dispositifs de supportage et de positionnement (8, 17) placés dans le local et un circuit primaire (3, 4, 5) disposé dans le bâtiment réacteur (10) dans lequel circule de l'eau sous pression, comportant deux canalisations (3, 5) reliées à la partie inférieure du générateur de vapeur (1) au niveau de tubulures correspondantes solidaires du générateur de vapeur, le procédé consistant à séparer le générateur de vapeur usagé (1) du circuit primaire par découpage des canalisations (3, 5) au voisinage des tubulures du générateur de vapeur (1), à extraire le générateur de vapeur usagé du local (11), à mettre en place dans le local (11) un générateur de vapeur neuf de remplacement (20) et à souder les tubulures (22a, 22b) du générateur de vapeur neuf aux canalisations correspondantes (3, 5), au niveau de chanfreins de soudage, caractérisé par le fait :

— qu'on effectue des mesures topométriques sur le générateur de vapeur neuf (20) pour déterminer de façon exacte la position de ses parties de support et de positionnement (25) destinées à venir en appui sur les dispositifs de supportage et de positionnement du local (11) et la géométrie des tubulures (22a, 22b) de raccordement au circuit primaire (3, 5),

— qu'on effectue des mesures topométriques dans le local (11) et sur le générateur de vapeur usagé (1), pour déterminer la géométrie des parties de raccordement du circuit primaire (3, 5) et des dispositifs de support et de positionnement (8, 17),

— qu'on détermine, par comparaison des mesures topométriques effectuées, la procédure de remplacement à mettre en oeuvre, c'est-à-dire le nombre et la position des coupes à effectuer sur les canalisations primaires (3, 5) et les modifications à effectuer sur les dispositifs de supportage et de positionnement (8, 17), pour la mise en place du générateur de vapeur neuf (20),

— qu'on effectue les coupes prévues et l'extraction du générateur usagé (1) du local (11), puis le dressage des surfaces découpées sur les canalisations primaires (3, 5),

— qu'on effectue des mesures topométriques dans le local (11) après extraction du générateur de vapeur usagé (1), pour déterminer la position exacte des dispositifs de support et de positionnement (8, 17) et des extrémités découpées des canalisations primaires (3, 5),

— qu'on vérifie par comparaison des mesures effectuées la possibilité de mise en oeuvre du procédé de remplacement,

— qu'on détermine la position exacte des chanfreins de soudage sur les extrémités des canalisations primaires (3, 5),

— qu'on usine les chanfreins correspondants, qu'on met en place le générateur de vapeur neuf (20) et ses dispositifs de support et de positionnement et qu'on effectue le soudage de raccordement des tubulures (22a, 22b) et des canalisations (3, 5).

## Patentansprüche

1. Verfahren zum integralen Austausch eines verbrauchten Dampferzeugers (1) eines Druckwasserkernreaktors, der ein Reaktorgebäude (10) aufweist, das einen Ort (11) definiert, in dem der Dampferzeuger (1) in einer vorbestimmten Stellung mittels Stütz- und Positioniervorrichtungen (8, 17), befestigt ist, die in dem Ort angeordnet sind, und mit einem ersten Kreislauf (3, 4, 5), der in dem Reaktorgebäude (10) angeordnet ist, in dem das Druckwasser zirkuliert, mit zwei Kanälen (3, 5), die mit dem unteren Bereich des Dampferzeugers (1) auf der Höhe von entsprechenden Rohrstützen verbunden sind, die mit dem Dampferzeugers verbunden sind, wobei das Verfahren besteht aus Trennen des verbrauchten Dampferzeugers (1) vom ersten Kreislauf, durch Abschneiden der Kanäle (3, 5) in der Nähe der Rohrstützen des Dampferzeugers (1), Herausziehen des verbrauchten Dampferzeugers aus dem Ort (11), dem Anbringen in dem Ort (11) eines neuen Austauschdampferzeugers (20) und Anschweißen der Rohrstützen (22a, 22b) des neuen Dampferzeugers an die entsprechenden Kanäle (3, 5) auf der Höhe von Schweißkanten, **dadurch gekennzeichnet :**

daß topometrische Messungen auf dem neuen Dampferzeuger (20) ausgeführt werden, um auf exakte Weise die Stellung seiner Stütz- und Positionierbereiche (25) zu bestimmen, die dazu dienen, in Andruck auf die Stütz- und Positioniervorrichtungen des Ortes (11) zu gelangen, und die Geometrie der Rohrstützen (22a, 22b) der Verbindung mit dem ersten Kreislauf (3, 5) zu bestimmen,

daß topometrische Messungen in dem Ort (11) und auf dem verbrauchten Dampferzeuger (1) vorgenommen werden, um die Geometrie der Verbindungsbereiche des ersten Kreislaufs (3, 5) und der Stütz- und Positioniervorrichtungen (8, 17) zu bestimmen,

daß durch Vergleichen der durchgeführten topometrischen Messungen das Vorgehen des durchzuführenden Austauschens, d.h. die Anzahl und die Stellung der durchzuführenden Schnitte an den ersten kanälen (3, 5) und die auf den Stütz- und Positioniervorrichtungen (8, 17) durchzuführenden Veränderungen für das An-Ort-und-Stelle- Setzen des neuen Dampferzeugers (20), bestimmt wird,

daß die vorgesehenen Schnitte und das Herausbringen des verbrauchten Dampferzeugers (1) aus dem Ort (11) durchgeführt wird, und sodann das Richten der geschnittenen Oberflächen auf den ersten kanälen (3, 5) durchgeführt wird,

daß topometrische Vermessungen in dem Ort (11) nach Abziehen des verbrauchten Dampfgenerators (1) vorgenommen werden, um die exakte Stellung der Stütz- und Positioniervorrichtungen (8, 17) und der abgeschnittenen Enden der ersten kanäle (3, 5) zu bestimmen,

daß durch Vergleichen der durchgeführten Messungen die Möglichkeit der Durchführung des Austauschverfahrens verifiziert wird,

daß die exakte Position der Schweißkanten auf den Enden der ersten kanäle (3, 5) festgelegt wird,

daß die entsprechenden Schweißkanten bearbeitet werden, daß der neue Dampferzeuger (20) und dessen Stütz- und Positioniervorrichtungen an Ort und Stelle gesetzt werden, und daß das Schweißen zum Verbinden der Rohrstützen (22a, 22b) mit den kanälen (3, 5) ausgeführt wird.

## Claims

1. Method for the complete replacement of a worn-out steam generator (1) of a pressurized water nuclear reactor which comprises a reactor building (10) defining a compartment (11) in which the steam generator (1) ismounted in a position specified by supporting and positioning devices (8, 17), placed in the compartment, and a primary circuit (3, 4, 5) arranged in the reactor building (10) in which pressurized water circulates, comprising two pipes (3, 5) connected to the lower part of the steam generator (1) in the region of the corresponding pipework which is fixedly connected to the steam generator, the method comprising separating the worn-out steam generator (1) from the primary circuit by cutting the pipes (3, 5) in the vicinity of the steam generator (1) pipework, removing the worn-out steam generator from the compartment (11), placing a new replacement steam generator (20) in position in the compartment (11) and welding the pipework (22a, 22b) of the new steam generator to the relevant pipes (3, 5), in the region of the welding chamfers, characterised in :

that topometric measurements are carried out on the new steam generator (20) to determine exactly the position of its supporting and positioning parts (25), intended to come to bear on the supporting and positioning devices of the compartment (11), and the layout of the pipework (22a, 22b) for connection to the primary circuit (3, 5),

that topometric measurements are carried out in the compartment (11) and on the worn-out steam generator (1) to determine the layout of the connections of the primary circuit (3, 5) and of the supporting and positioning devices (8, 17),

that a comparison of the topometric measurements which are carried out is used to determine the replacement method to be employed, i.e. how many and where the cutting operations are to be carried out on the primary pipes (3, 5), and the modifications to be made to the supporting and positioning devices (8, 17), for placing the new steam generator in position (20),

that the envisaged cutting operations and the removal of the worn-out steam generator (1) from the compartment (11) are carried out, followed by the grinding of the cut surfaces on the primary pipes (3, 5),

that topometric measurements are carried out in the compartment (11) after removal of the worn-out steam generator (11), to determine the exact position of the supporting and positioning devices (8, 17) and of the cut ends of the primary pipes (3, 5),

that the feasibility of employing the replacement procedure is verified by comparison of the measurements carried out,

that the exact position of the welding chamfers on the ends of the primary pipes (3, 5) is determined, and

that the corresponding chamfers are machined, that the new steam generator (2) and its supporting and positioning devices are placed in position and that the welding connection of the pipework (22a, 22b) and of the pipes (3, 5) is performed.

FIG.1

**FIG.2**

**FIG. 3**

**FIG.4**

FIG.5

**FIG.6a**

FIG. 6b

FIG. 7a

FIG. 7b

FIG. 8

FIG. 9

FIG. 9a

EP 0 289 388 B1

**FIG.10**

**FIG.11**

22a

67

70

74

FIG.12

65

69

73

68

72

71

67

66

60

FIG.13

72

75

70

66

69

3

60

**FIG.14**

60

81

64

82

84

83

25

86

**FIG.15**

86

84

86

82

84

**FIG.16**

84

82

85

43

**FIG.17**

**FIG.18**